# EUROPEAN PATENT APPLICATION

(11) **EP 1 445 816 A1**
(43) Date of publication of application: **11.08.2004**
(21) Application number: 03028698.3
(22) Date of filing: 16.12.2003
(51) Int. Cl.: H01M 8/04, H01M 16/00

(54) **Electronic apparatus system, and operation control method**

(30) Priority: 10.01.2003 JP 2003004369
(71) Applicant: Kabushiki Kaisha Toshiba, Tokyo (JP)
(72) Inventor: Ozeki, Akihiro, Toshiba Corporation, Minato-ku Tokyo 105-8001 (JP); Nakamura, Koji, Toshiba Corporation, Minato-ku Tokyo 105-8001 (JP)
(74) Representative: Henkel, Feiler & Hänzel

(57) **Abstract**

An electronic apparatus system of this invention includes an electronic apparatus (1), and a fuel cell unit (2) which is detachable from the electronic apparatus (1). The fuel cell unit (2) incorporates a DMFC (22) that can produce electricity by chemical reaction, and a rechargeable secondary battery (23). The fuel cell unit (2) has a function of informing the electronic apparatus of the states of the DMFC (22) and secondary battery (22) incorporated in it as state information. The electronic apparatus (1) has a function of executing its operation control on the basis of the state information sent from the fuel cell unit (2).

## Description

The present invention relates to an operation control technique of an electronic apparatus system which can operate using, e.g., a direct methanol fuel cell as a power supply.

In recent years, various portable electronic apparatus such as a portable information terminal called a PDA (Personal Digital Assistant), digital camera, and the like, which can be driven by a battery, have been developed and are prevalent.

Also, recently, environmental problems are widely recognized, and the development of environment-friendly batteries has been extensively made. As a battery of this type, a direct methanol fuel cell (to be abbreviated as DMFC hereinafter) is well known.

This DMFC produces electrical energy by chemical reaction of methanol as fuel and oxygen. The DMFC has a structure in which two electrodes made up of a porous metal or carbon sandwich an electrolyte (e.g., Hironosuke Ikeda, "All About Fuel Cells", NIPPON JITSUGYO PUBLISHING, CO., LTD., August 20, 2001, pp. 216 - 217). Since this DMFC does not produce any hazardous waste, its practical application is strongly demanded.

The DMFC requires an auxiliary mechanism such as a pump or the like to increase the output electric power per unit volume. However, since electric power that can be produced by the DMFC depends on the temperature in a cell stack, even after the auxiliary mechanism works to supply fuel and air (oxygen) into the cell stack, no load can be connected until the temperature in the cell stack reaches a predetermined value. That is, in an electronic apparatus system that operates using the DMFC as a power supply, control that not only recognizes the ON/OFF state of the operation of the DMFC but also considers its operation state is required.

Since the DMFC normally comprises a fuel tank that stores fuel as a cartridge, control that considers attachment/detachment of this fuel tank and the remaining fuel amount is also required.

Furthermore, when a secondary battery such as a lithium battery or the like is used in combination so as to assure electric power upon starting up the auxiliary mechanism of the DMFC and to cope with a load peak, control that considers the state of this secondary battery is required.

The present invention has been made in consideration of such situation, and has as its object to provide an electronic apparatus system and operation control method, which can execute operation control on the basis of the states of a fuel cell and secondary battery.

In order to achieve the above object, the present invention provides an electronic apparatus system characterized by comprising a cell unit which has a fuel cell that can produce electricity by chemical reaction, and an output unit that outputs state information of the fuel cell, and an electronic apparatus which can operate based on electric power produced by the cell unit, and has a control unit that executes operation control on the basis of the state information output from the output unit.

In the electronic apparatus system of the present invention, the cell unit comprises a mechanism for outputting state information indicating the state of the fuel cell, and the electronic apparatus comprises a mechanism for executing operation control based on this state information. Hence, the operation control that considers the state of the fuel cell is implemented. For example, the system is started after the control waits until the fuel cell reaches a state that can guarantee the rated output in place of being started simultaneously with the start of operation of the fuel cell. That is, an electronic apparatus system and operation control method, which can execute operation control on the basis of the states of the fuel cell and secondary battery can be provided.

This summary of the invention does not necessarily describe all necessary features so that the invention may also be a sub-combination of these described features.

The invention can be more fully-understood from the following detailed description when taken in conjunction with the accompanying drawings, in which:
FIG. 1 shows the outer appearance of an electronic apparatus system according'to an embodiment of the present invention;
FIG. 2 is a schematic block diagram showing the arrangement of a fuel cell unit applied to the electronic apparatus system according to the embodiment of the present invention;
FIG. 3 is a schematic block diagram showing the arrangement of an electronic apparatus applied to the electronic apparatus system according to the embodiment of the present invention;
FIGS. 4A and 4B are a table showing an example of state information associated with the state of a DMFC, which is exchanged between the fuel cell unit and electronic apparatus applied to the electronic apparatus system according to the embodiment of the present invention;
FIGS. 5A and 5B are a table showing an example of state information associated with the state of a secondary battery, which is exchanged between the fuel cell unit and electronic apparatus applied to the electronic apparatus system according to the embodiment of the present invention;
FIG. 6 is a table showing the drive control of LEDs, which is executed by a power supply controller of the electronic apparatus applied to the electronic apparatus system according to the embodiment of the present invention on the basis of the state information; and
FIG. 7 is a flowchart showing the operation sequence associated with power supply control of electronic apparatus system according to the-embodiment of the present invention.

Embodiments of the present will be described hereinafter with reference to the accompanying drawings.

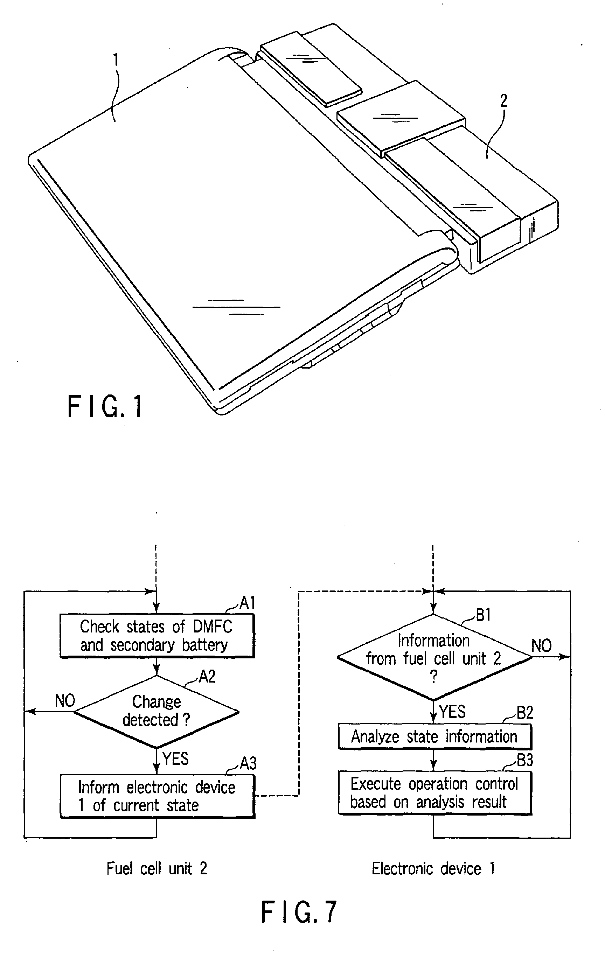

FIG. 1 shows the outer appearance of an electronic apparatus system according to an embodiment of the present invention.

As shown in FIG. 1, an electronic apparatus system of this embodiment comprises an electronic apparatus 1 and a fuel cell unit 2 which is detachable from the electronic apparatus 1. The electronic apparatus 1 is a notebook type personal computer which is formed by attaching via a hinge mechanism a lid unit which has an LCD (Liquid Crystal Display) on its inner surface to a main body unit to freely open/close. The electronic apparatus 1 can operate by electric power supplied from the fuel cell unit 2. Two LEDs (Light Emitting Diodes; not shown) are provided to the front surface of the main body unit of this electronic apparatus 1, i.e., a nearly vertical surface which is exposed even when the lid unit is closed.

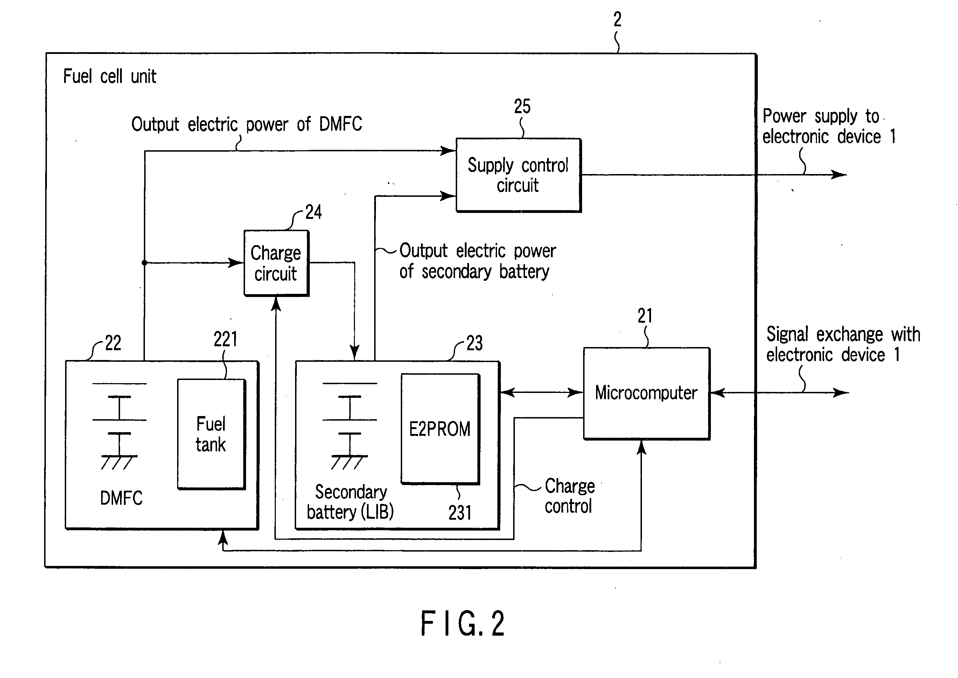

On the other hand, the fuel cell unit 2 incorporates a DMFC that can produce electricity by chemical reaction, and a rechargeable secondary battery. FIG. 2 is a schematic block diagram showing the arrangement of this fuel cell unit 2.

As shown in FIG. 2, the fuel cell unit 2 comprises a microcomputer 21, DMFC 22, secondary battery 23, charge circuit 24, and supply control circuit 25.

The microcomputer 21 controls the operation of the overall fuel cell unit 2, and has a communication function of exchanging signals with the electronic apparatus 1. The DMFC 22 has a detachable cartridge type fuel tank 221. The DMFC 22 outputs electric power produced upon chemical reaction between methanol stored in this fuel tank 221 and air (oxygen). This chemical reaction is made in a reactor called a cell stack. In order to efficiently supply methanol and air to this cell stack, the DMFC 22 comprises an auxiliary mechanism such as a pump and the like. The DMFC 22 has a mechanism which informs the microcomputer 21 of attachment/detachment of the fuel tank 221, the remaining methanol amount in the fuel tank 221, the operation state of the auxiliary mechanism, and the current output electric power.

The secondary battery 23 accumulates electric power output from the DMFC 22 via the charge circuit 24, and outputs the accumulated electric power in accordance with an instruction from the microcomputer 21. The secondary battery 23 comprises an EEPROM 231 that holds basic information indicating its discharge characteristics and the like. The EEPROM 231 can be accessed by the microcomputer 21. The secondary battery 23 has a mechanism that informs the microcomputer 21 of the current output voltage and current values. The microcomputer 21 calculates the remaining battery amount of the secondary battery 23 on the basis of the basic information read out from the EEPROM 231, and the output voltage and current values sent from the secondary battery. Assume that the secondary battery 23 is a lithium battery (LIB).

The charge circuit 24 charges the secondary battery 23 using electric power output from the DMFC 22, and the ON/OFF state of its charge process is controlled by the microcomputer 21. The supply control circuit 25 externally outputs electric power of the DMFC 22 and secondary battery 23 as needed.

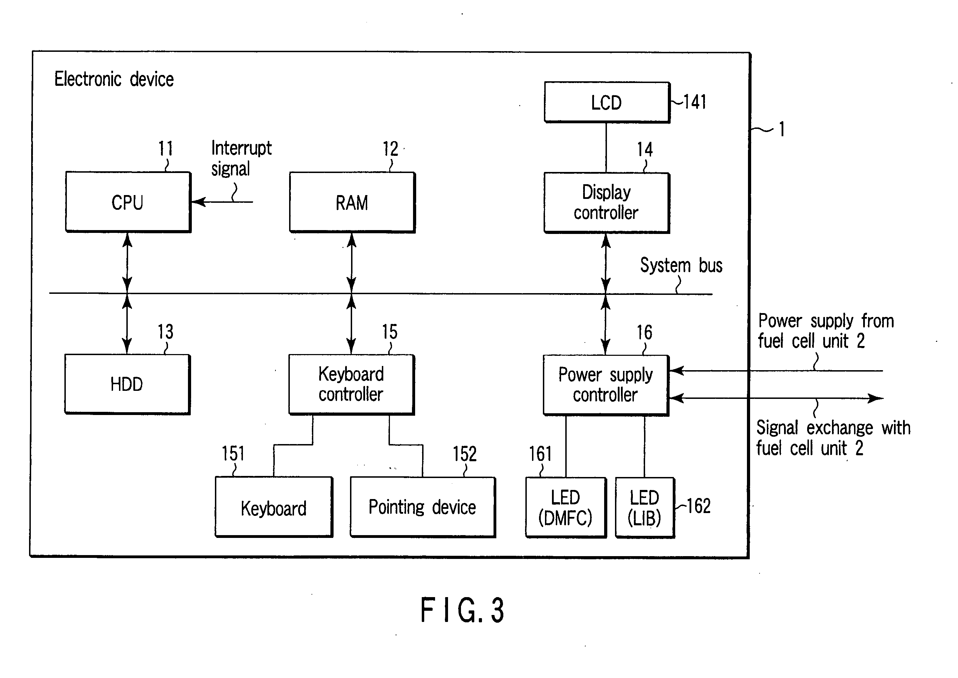

FIG. 3 is a schematic block diagram showing the arrangement of the electronic apparatus 1.

As shown in FIG. 3, the electronic apparatus 1 comprises a CPU 11, main memory (RAM) 12, HDD 13, display controller 14, keyboard controller 15, and power supply controller 16, which are connected to a system bus.

The CPU 11 controls the operation of the overall electronic apparatus 1, and executes various programs stored in the main memory 12. The RAM 12 is a storage medium serving as a main storage of this electronic apparatus 1, and stores various programs to be executed by the CPU 11 and various data used by these programs. On the other hand, the HDD 13 is a storage medium serving as an external storage of this electronic apparatus 1, and stores various programs and various data in large quantities as an auxiliary unit of the RAM 12.

The display controller 14 is responsible for the output side of a user interface of this electronic apparatus 1, and controls an LCD 141 to display image data generated by the CPU 11. On the other hand, the keyboard controller 15 is responsible for the input side of the user interface of the electronic apparatus 1. The keyboard controller 15 converts operations of a keyboard 151 and pointing device 152 into numerical values, and passes them to the CPU 11 via internal registers.

The power supply controller 16 controls power supply to the respective units in the electronic apparatus 1. The power supply controller 16 has a power reception function of receiving power supply from the fuel cell unit 2, and a communication function of exchanging signals with the fuel cell unit 2. The partner on the fuel cell unit 2 side, with which the power supply controller 16 exchanges signals is the microcomputer 21 shown in FIG. 2. The electronic apparatus system is characterized in that the states of the DMFC 22 and secondary battery 23 incorporated in the fuel cell unit 2 are sent to the electronic apparatus 1 as state information via communications between the microcomputer 21 of the fuel cell unit 2 and the power supply controller 16 of the electronic apparatus 1, and the electronic apparatus 1 can execute operation control based on the received states. Such characteristic feature will be described in detail below. Note that the two LEDs provided to the front surface of the main body unit of the electronic apparatus 1 include an LED 161 used to inform the state of the DMFC 22, and an LED 162 used to inform the state of the secondary battery 23. These LEDs undergo display control of the power supply controller 16.

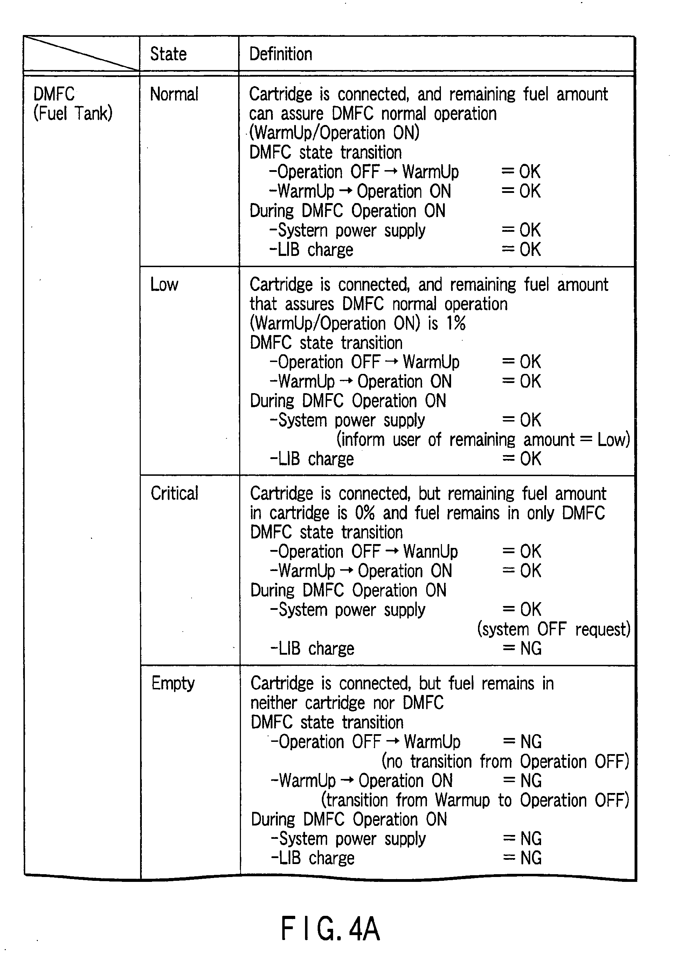

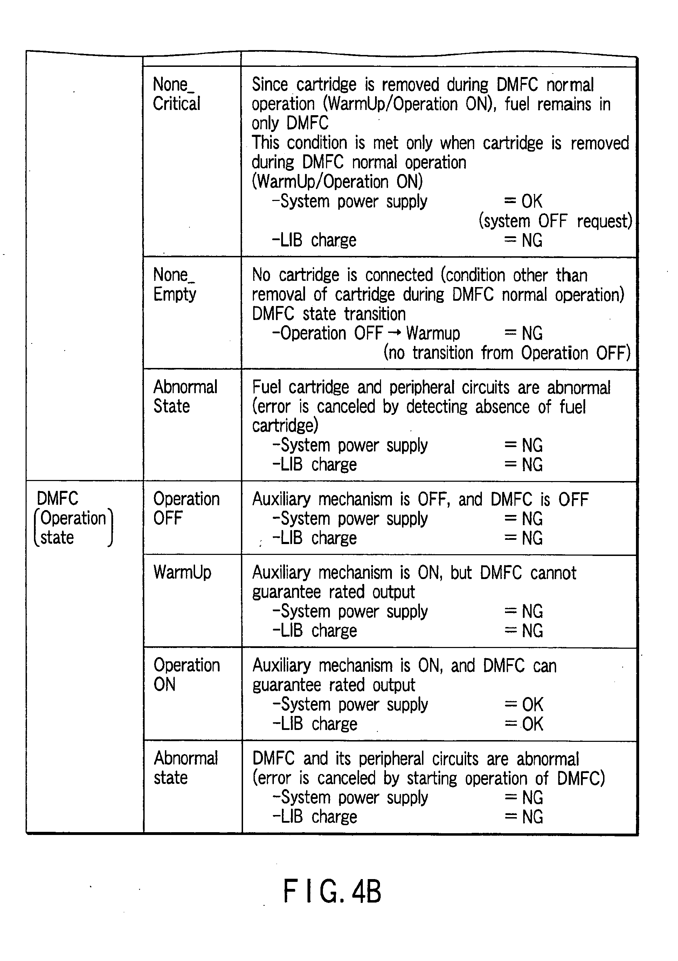

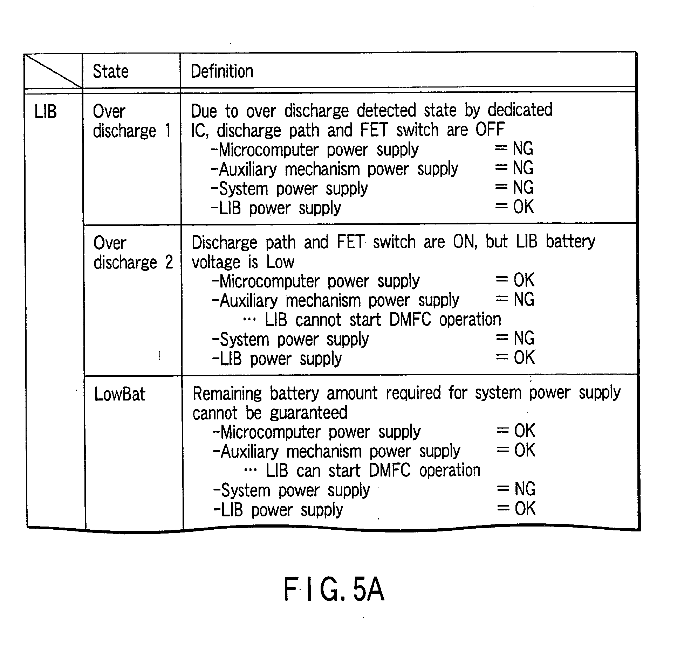

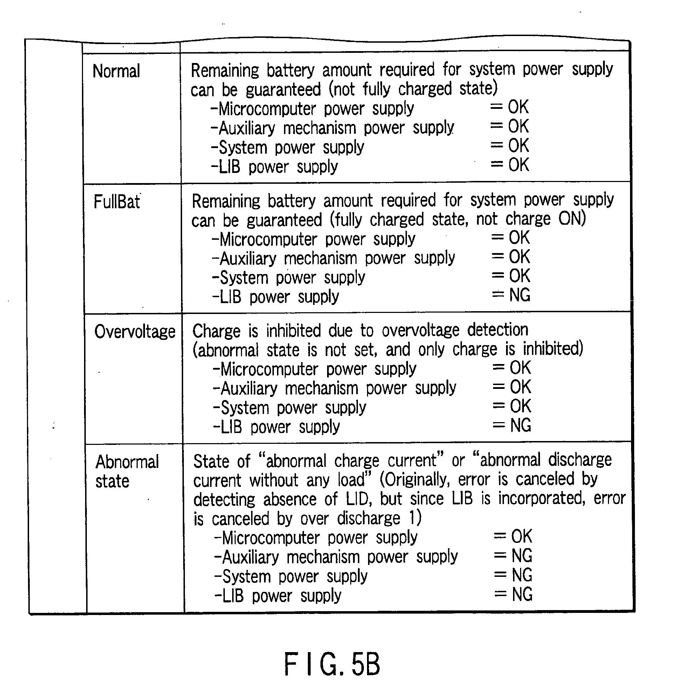

FIGS. 4A, 4B and 5A, 5B show examples of state information exchanged between the fuel cell unit 2 and electronic apparatus 1 in this electronic apparatus system. FIGS. 4A and 4B show state information associated with the state of the DMFC 22, and FIGS. 5A and 5B show state information associated with the state of the secondary battery 23.

As shown in FIGS. 4A and 4B, the microcomputer 21 of the fuel cell unit 2 sends two different states to the power supply controller 16 of the electronic apparatus 1, i.e., the state of the fuel tank 221 and the operation state of the DMFC 22 as state information associated with the state of the DMFC 22.

In order to send the state of the fuel tank 221 as state information, the microcomputer 21 monitors attachment/detachment of the fuel tank 221 and the remaining fuel amount in the attached fuel tank 221. The microcomputer 21 sends the following state information to the power supply controller 16 of the electronic apparatus 1 in accordance with the monitor result.
(A1) NORMAL: The fuel tank 221 is attached, and its remaining fuel amount is sufficient.
(A2) LOW: The fuel tank 221 is attached, but its remaining fuel amount is insufficient.
(A3) CRITICAL: The fuel tank 221 is attached, but its remaining fuel amount is zero, and fuel remains in only the cell stack of the DMFC 22.
(A4) EMPTY: The fuel tank 221 is attached, but its remaining fuel amount is zero, and no fuel remains in only the cell stack of the DMFC 22.
(A5) None_CRITICAL: Fuel remains in the cell stack of the DMFC 22, but no fuel tank 221 is attached (the fuel tank 221 is removed during operation of the DMFC 22).
(A6) None_EMPTY: No fuel tank 221 is attached (the DMFC 22 is OFF).
(A7) Abnormal state: The fuel tank 221 suffers some abnormality.

Also, the microcomputer 21 sends the following state information to the power supply controller 16 of the electronic apparatus 1 as the operation state of the DMFC 22.
(B1) Operation OFF: The DMFC 22 is OFF (the auxiliary mechanism is OFF).
(B2) WARMUP: The auxiliary mechanism is active, but the rated output of the DMFC 22 is not guaranteed yet (the state immediately after the DMFC 22 begins to operate).
(B3) Operation ON: The DMFC 22 is normally operating (the auxiliary mechanism is active).
(B4) Abnormal state: The DMFC 22 suffers some abnormality.

Furthermore, as shown in FIGS. 5A and 5B, the microcomputer 21 sends the following state information to the power supply controller 16 of the electronic apparatus 1 as that which is associated with the state of the secondary battery 23.
(C1) Over discharge 1: Over discharge is detected, and an electric power output is cut off.
(C2) Over discharge 2: The secondary battery 23 suffers a low-battery state.
(C3) LOWBAT: The remaining battery amount required to assure the system operation of the electronic apparatus 1 cannot be guaranteed.
(C4) NORMAL: The remaining battery amount required to assure the system operation of the electronic apparatus 1 can be guaranteed (other than the fully charged state).
(C5) FULLBAT: The remaining battery amount required to assure the system operation of the electronic apparatus 1 can be guaranteed, and the fully charged is set.
(C6) Overvoltage: An overvoltage is detected, and a charge process is inhibited.
(C7) Abnormal state: A charge current is abnormal or a discharge current without any load is abnormal.

Since various kinds of state information mentioned above are sent from the microcomputer 21 of the fuel cell unit 2 to the power supply controller 16 of the electronic apparatus 1, the electronic apparatus 1 can execute operation control that considers the characteristics unique to the DMFC 22. More specifically, the electronic apparatus 1 can, e.g., start the system after it waits until the rated output of the DMFC 22 can be guaranteed in place of starting the system simultaneously with the start of operation of the DMFC 22.

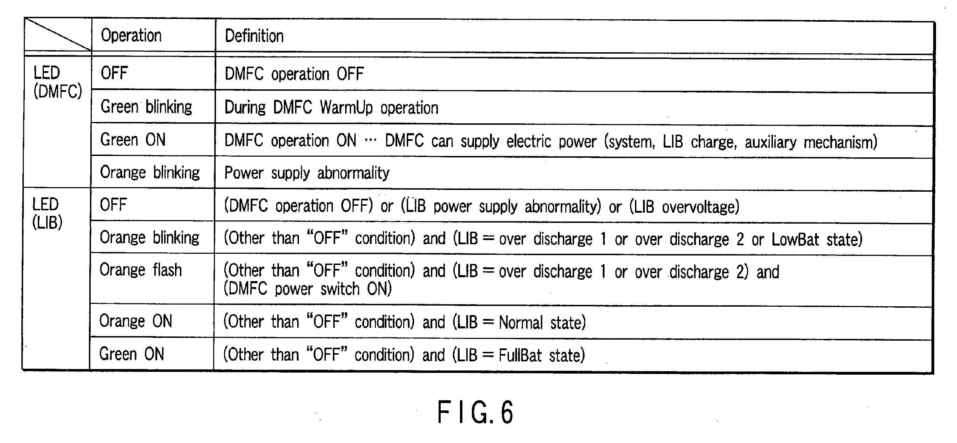

FIG. 6 shows the drive control of the LEDs 161 and 162, which is executed by the power supply controller 16 on the basis of the state information sent from the microcomputer 21 of the fuel cell unit 2.

The power supply controller 16 executes the drive control of the LED 161 used to inform the state of the DMFC 22 as follows.
(A1) OFF: The DMFC 22 is OFF, i.e., "Operation OFF" is received as state information associated with the state of the DMFC 22.
(A2) Green blinking: The DMFC 22 is warming up, i.e., "WARMUP" is received as state information associated with the state of the DMFC 22.
(A3) Green ON: The DMFC 22 is operating, i.e., "Operation ON" is received as state information associated with the state of the DMFC 22.
(A4) Orange blinking: The DMFC 22 is abnormal, i.e., "Abnormal state" is received as state information associated with the state of the DMFC 22.

The power supply controller 16 also executes the drive control of the LED 162 used to inform the state of the secondary battery 23 as follows.
(B1) OFF: The DMFC 22 is OFF, i.e., the secondary battery 23 is abnormal or is inhibited from being charged. That is, "Operation OFF" is received as state information associated with the state of the DMFC 22, or "Abnormal state" or "Overvoltage" is received as state information associated with the state of the secondary battery 23.
(B2) Orange blinking: One of conditions other than "OFF" is met, i.e., the electric power output of the secondary battery 23 is cut off due to over discharge detection, the secondary battery 23 suffers a low-battery state, or the secondary battery cannot guarantee the remaining battery amount required to assure the system operation of the electronic apparatus 1. That is, "Over discharge 1", "Over discharge 2", or "LOWBAT" is received as state information associated with the state of the secondary battery 23.
(B3) Orange flash: One of conditions other than "OFF" is met, i.e., the electric power output of the secondary battery 23 is cut off due to over discharge detection, or the secondary battery 23 suffers a low-battery state, and the startup operation of the DMFC 22 has been made. That is, "Over discharge 1" or "Over discharge 2" is received as state information associated with the state of the secondary battery 23, and "Abnormal state" is received as state information associated with the state of the DMFC 22.
(B4) Orange ON: A condition other than "OFF" is met, i.e., the secondary battery 23 can guarantee the remaining battery amount required to assure the system operation of the electronic apparatus 1 (other than the fully charged state). That is, "NORMAL" is received as state information associated with the state of the secondary battery 23.
(B5) Green ON: A condition other than "OFF" is met, i.e., the secondary battery 23 can guarantee the remaining battery amount required-to assure the system operation of the electronic apparatus 1, and the fully charged state is set. That is, "FULLBAT" is received as state information associated with the state of the secondary battery 23.

By executing the drive control of the LEDs 161 and 162, as described above, the system can inform the user of the states of the DMFC 22 and secondary battery 23 incorporated in the fuel cell unit 2 as needed.

FIG. 7 is a flowchart showing the operation sequence associated with the power supply control of the electronic apparatus system of this embodiment.

The microcomputer 21 of the fuel cell unit 2 monitors the states of the DMFC 22 and secondary battery 23 (step A1) to check if the states have changed (step A2). If the states have changed (YES in step A2), the microcomputer 21 sends state information indicating the current states of the DMFC 22 and secondary battery 23 to the power supply controller 16 of the electronic apparatus 1 (step A3).

The power supply controller 16 waits to receive the state information from the microcomputer 21 of the fuel cell unit 2 (step B1). Upon reception of some state information (YES in step B1), the power supply controller 16 analyzes the received state information (step B2). The power supply controller 16 executes the operation control of the electronic apparatus 1 on the basis of the analysis result (step B3).

As described above, the electronic apparatus system of this embodiment informs the electronic apparatus 1 of the states of the DMFC 22 and secondary battery 23 incorporated in the fuel cell unit 2 as state information via communications between the microcomputer 21 of the fuel cell unit 2 and the power supply controller 16 of the electronic apparatus 1. Thus, the electronic apparatus 1 can execute the operation control based on the received states.

In the aforementioned embodiment, the fuel cell unit 2 incorporates two different types of batteries, i.e., the DMFC 22 and secondary battery 23. However, the present invention is effective even when the fuel cell unit 2 incorporates the DMFC 22 alone.

## Claims

1. An electronic apparatus system **characterized by** comprising:
a cell unit (2) which has a fuel cell (22) that can produce electricity by chemical reaction, and an output unit (21) that outputs state information of the fuel cell; and
an electronic apparatus (1) which can operate based on electric power produced by the cell unit, and has a control unit (11) that executes operation control on the basis of the state information output from the output unit.

2. The electronic apparatus system according to claim 1, **characterized in that** the fuel cell comprises:
a reactor which produces electric power by chemical reaction; and
a fuel tank (221) which is detachably provided to the fuel cell, and stores fuel which is to be supplied to the reactor and is required for the chemical reaction, and
the output unit outputs information indicating attachment/detachment of the fuel tank as the state information.

3. The electronic apparatus system according to claim 2, **characterized in that** the output unit outputs information indicating a remaining fuel amount in the fuel tank as the state information.

4. The electronic apparatus system according to claim 1, **characterized in that** the output unit outputs, as the state information, information indicating one of an inactive state in which the reactor does not make chemical reaction, a state in which the reactor produces electric power, but a rated output cannot be guaranteed, and a state in which the reactor produces electric power, and the rated output can be guaranteed.

5. An operation control method for an electronic apparatus system which includes a cell unit which incorporates a fuel cell that can produce electricity by chemical reaction, and an electronic apparatus which can operate by electric power supplied from the cell unit and has an informing unit, **characterized by** comprising the steps of:
transmitting (A3) state information to the electronic apparatus by the cell unit, when a state of the fuel cell has changed; and
informing (B3) the state of the cell unit via the informing unit in accordance with the state information received from the cell unit by the electronic apparatus.

6. The operation control method according to claim 5, **characterized in that** the state information is information indicating attachment/detachment of a fuel tank which stores fuel that is supplied to a reactor and is required for the chemical reaction.

7. The operation control method according to claim 5, **characterized in that** the state information is information indicating a remaining amount of the fuel tank.

8. The operation control method according to claim 5, wherein the cell unit further comprises a secondary battery, and the state information is information indicating a remaining amount of the secondary battery.
